# EUROPEAN PATENT SPECIFICATION

(11) **EP 2 372 367 B1**
(45) Date of publication and mention of the grant of the patent: **11.05.2016**
(21) Application number: 10158946.3
(22) Date of filing: 01.04.2010
(51) Int. Cl.: B04B 11/04, B04B 13/00, G01N 35/00

(54) **A computer-implemented method for operating an automated sample workcell**
Computerimplementiertes Verfahren zum Betreiben einer automatischen Probenarbeitszelle
Procédé informatisé pour utiliser une cellule d'échantillon automatique

(43) Date of publication of application: 05.10.2011
(73) Proprietor: F. Hoffmann-La Roche AG, 4070 Basel (CH); Roche Diagnostics GmbH, 68305 Mannheim (DE)
(72) Inventor: Hächler, Jörg, 6317 Oberwil b. Zug (CH)
(74) Representative: Richardt Patentanwälte PartG mbB

(56) References cited:
- WO-A1-89/06162
- WO-A2-2007/018897
- US-A1- 2005 037 502
- US-A1- 2008 182 742
- US-A1- 2008 190 857
- US-B1- 6 390 965

## Description

### Field of the invention

The invention relates to a computer implemented method and to an automated sample workcell allowing the centrifugation of samples having assigned different centrifugation parameters within the same centrifuge.

### Background and related art

In analytical laboratories, in particular clinical laboratories, a multitude of analyses on biological samples are executed in order to determine physiological and biochemical states of patients being indicative of a disease, nutrition habits, drug effectiveness or organ function.

Biological samples used in those analyses can be a number of different biological fluids such as blood, urine, cerebral-spinal fluid, saliva etc. These original biological samples may be further processed prior to the analysis. Often the sample is taken into a vial which already contains substances as e.g. citrate buffer, EDTA buffer and/or fluids forming a barrier during centrifugation.

Before an analysis can actually be carried out on a biological sample, it is usually necessary to perform a set of pre-analytical steps on a biological sample such as unloading a sample from a sample input station, diluting or concentrating the sample, capping or de-capping the sample, aliquoting it, supplementing it with various buffers, media and substances, or centrifuging the sample or an aliquot thereof to separate sample constituents. For safety reasons as well as for reasons of analytical quality, reproducibly and efficiency, a growing number of those 'pre-analytical' steps and procedures are executed automatically by automated sample workcell systems, also known as 'automated pre-analytical systems'.

WO2007018897A2 describes a method for processing chemistry and coagulation tests automatically in a laboratory workcell system comprising multiple analyzers and a centrifuge. For the centrifuge a current centrifuge operation protocol is established. Patient samples are classified at the input station of an automated clinical workcell system and treated differently according to their pre-analysis centrifuging requirements. If a sample does not have centrifuging requirements which match the currently established centrifuge operating protocol, the sample is retained at the input station until the centrifuge operating protocol is changed appropriately. After the change of the centrifuge operating protocol is completed, the sample is loaded into the centrifuge and centrifuged according to the new operating protocol. If a sample has centrifuging requirements which match the currently established centrifuge operating protocol, the sample is loaded into the centrifuge, centrifuged according to the established centrifuge operating protocol, and then forwarded to an appropriate analyzer. The method disclosed in WO2007018897A2 therefore automatized the task of adopting centrifuge operating protocols according to the requirements of the current set of samples to be analyzed. The disadvantage of said method is that only samples requiring the same centrifugation protocol can be centrifuged at a time in one centrifuge.

US200050037502A1 describes a method for automatically operating a sample handling system to conduct assays on a number of patient samples by comparing the assays to be conducted with a set of assay defined rules. A set of analyzers being part of the sample handling system is subdivided into analyzers which are in compliance with the assay defined rules and analyzers not in compliance with the set of assay defined rules. If necessary, at least one analyzer is brought into compliance with assay defined rules of an assay to be conducted on a set of patient samples. The patient samples are then supplied to the analyzer being in compliance with assay defined rules.

WO2007/018897 A2 describes a method for automatically providing for classification of samples at the input station of a clinical laboratory workcell and allowing only those samples that have centrifuging requirements which are satisfied by currently established centrifuge operating protocols to be processed by a centrifuge and by an analyzer associated with said workcell.

US 2008/0190857 A1 describes an apparatus and method of forming a solid-fibrin web. The apparatus includes a centrifuge having a housing, an actuator, a wheel, and a flange. The housing includes a recessed area and a base supportable on a surface. The wheel is coupled to the actuator and extends into the recessed area and is adapted to contact a first end of a container. The flange extends into the recessed area opposite the wheel and defines an adjustable distance between the wheel and the flange. The flange is adapted to contact a second end of the container and the actuator is operable to rotate the container.

US 2008/0182742 A1 discloses a centrifuge including a plurality of centrifuge disks. Each disc has an attachment for attaching a container. The container contains the liquid to be centrifuged. The centrifuge also includes a disk drive positioned to engage and rotate the discs and a controller for controlling which disks are engaged or disengaged from the disk driver and the amount of time each disc is centrifuged.

US 2005/0037502 A1 discloses a method for automatically operating a sample handling system and associated analyzers to conduct assays on a number of patient samples by comparing the assays to be conducted with a set of assay defined rules, subdividing the analyzers into analyzers which are in compliance with the assay defined rules and analyzers not in compliance with the set of assay defined rules; thereafter, operating the system to supply patient samples to analyzers in compliance or operating the system so as to bring at least one analyzer into compliance with the assay defined rules and supplying patient samples to such an analyzer.

US 6390965 B1 describes a centrifugal separator having a cylindrical bottomed main rotor body, and a rack configured with a plurality of rack parts along the inner circumferential surface of the main rotor body, which rack parts are linked together and are able to move in radio directions of the main rotor body, so that when the main rotor body is rotated, the rack parts are pressed against the inner circumferential surface of the main rotor body and held there by the centrifugal forces associated with the rotating of the main rotor body.

VVO 89/06162 describes an improved method for predicting success of two more therapies which relies on estimating the lowest effective concentration of a therapeutic agent that recites in a majority of tumor cell kill in vitro. The method includes an assay and apparatus for simultaneously analyzing a series of delusions of a therapeutic agent using 90% cell kill as an index to effective cytotoxic concentration of the agent.
US5865718A describes a system and method for operating one or multiple centrifuges using a protocol record database. The user can search the database for the centrifugation protocol necessary for a particular specimen or type of separation desired. While said and other inventions have increased the degree of automatization of sample handling workflows, several aspects of processing samples are still not flexible enough for many tasks of clinical diagnostics, in particular in regard to the centrifugation of samples requiring different centrifugation protocols. As a consequence, centrifugation times of state-of-the-art pre-analytical systems are too long, the sample turnaround numbers are too low, or a multitude of centrifuges is necessary to guarantee a fast processing of samples requiring different centrifugation protocols by using multiple centrifuges in parallel, which significantly increases the costs of pre-analytical systems.

### Summary of invention

The invention relates to a computer implemented method and workcell system allowing the centrifugation of samples with different centrifugation parameters within one centrifuge as claimed in the respective independent claims. Embodiments of the invention are given in the dependent claims.

The option to centrifuge samples having different centrifugation requirements is particularly advantageous, as no dedicated centrifuge for each particular centrifugation protocol is needed. This reduces the number of centrifuges required and thereby also reducing the costs of the complete sample workcell system. Compared to workcell systems using only one centrifuge which sequentially centrifuges samples of different centrifugation requirements and which are often not loaded to their full capacity, the time required to centrifuge all samples according to the invention is reduced.

Sample workcell systems are often highly complex systems comprising a multitude of different laboratory apparatus connected by one or multiple conveyors. Sample workcell systems may comprise, in addition pre-analytical sample processing units such as centrifuges, capping and de-capping units or aliquoting units. Samples may be transported automatically or manually from a pre-analytical system to an analyzer. A variety of analyzers is known in the art differing from one another e.g. in the types of reagents used, the number and type of biological samples that can be analyzed in a unit of time, the analytical approach etc.

A typical, but not the only example where the limitations of state-of-the-art workcell systems are overcome by embodiments of the invention is the centrifugation of patient samples, in particular whole blood samples, by centrifuges of a clinical workcell system in order to specifically prepare the sample for a desired type of blood analysis.

Blood flows throughout the whole body, carrying nutrients to the organs as well as waste products to the excretory systems. For these reasons, many medical conditions have an effect on the components of blood and blood tests are the most commonly performed clinical analyses. Most routine analyses are done on plasma or serum samples instead on whole blood samples because the cellular components of the blood interfere with some analytical tests. Serum and plasma can be frozen or cooled and can therefore be stored for several days or weeks for subsequent analysis. Therefore, it is common practice to centrifuge whole blood samples in order to obtain plasma or serum from blood cells before the plasma or serum is stored or analyzed.

Blood plasma is the liquid component of blood lacking the blood cells. It is mostly water and contains dissolved proteins, glucose, clotting factors, mineral ions, and hormones. Blood plasma is prepared by spinning whole blood samples containing anti-coagulant substances in a centrifuge until the blood plasma is separated from the blood cells at the bottom of the tube.

Blood serum is blood plasma without fibrinogen or the other clotting factors. It includes all proteins not used in blood clotting and all of the electrolytes, antibodies, antigens, hormones as well as exogenous substances like drugs. Blood serum is commonly used for a broad variety of analyses such as analyses for the detection of antibodies, for blood typing, or for DNA analytics in a forensic laboratory. Analyses are laboratory procedures characterizing a parameter of a biological sample, e.g. its opacity, or of an analyte of the sample. An analyte is a component of a sample to be analyzed, e.g. molecules of various sizes, ions, proteins, metabolites and the like. The gathered information may be further used to evaluate the impact of the administration of drugs on the organism or on particular tissues or to make a diagnosis. The determination of analytes and their concentrations within a biological sample is in the context of blood sample analysis often referred to as 'clinical chemistry'. The characterization of the cellular components of blood samples is called 'clinical hematology', while laboratory analyses evaluating an individual's clotting mechanism are referred to as 'coagulation analyses'.

The clotting of a blood sample can make clinical chemistry analyses impossible or results in the generation of erroneous measurement values. Therefore, clotting is prevented for those kinds of analyses by adding anticoagulant substances to the blood samples immediately after it is obtained from the patient. Such substances include sodium citrate, EDTA, heparin and others. Some vials used for collecting whole blood samples already comprise such anticoagulant substances.

In case serum is to be obtained from a whole blood sample, the sample tube may comprise substances which initiate and accelerate clotting, so called 'clot activators', which accelerate the clotting of fibrinogen, blood cells and other clotting factors. Said blood components can be separated after the completion of the clotting process by centrifugation.

As the sample tubes used to collect blood often comprise additional substances such as clot activators or anticoagulant substances which have an impact on the processing of the sample, a mix up of sample tube types can make a blood sample unusable for analysis. To prevent errors in the collection and handling of samples, the color of the sample caps of many manufacturers is uniformly encoded according to a fixed color scheme, and sample tubes are provided by tube manufacturers which are adapted for pre-analytical and analytical requirements of a particular analysis, e.g. a clinical chemistry analysis, or a hematological or coagulation analysis. Commonly, manufacturers of sample tubes for laboratory analyses provide their customers with information on recommended centrifugation protocols, the recommended centrifugation protocol being considered as the optimum centrifugation protocol to prepare a sample for a desired analysis.

Table 1 lists a set of sample types I-VII, each sample type comprising a sample tube of a particular material, containing a particular set of substances and being optimized for the preparation of samples according to the requirements of one or a set of analyses. In table 2, centrifugation parameters recommended for each sample tube type by a manufacturer are listed.

A centrifugation protocol is a set of instructions controlling the operation of a centrifuge according to a set of centrifugation parameters.

A centrifugation parameter according to embodiments of the present invention may be, but is not limited to, the centrifugal force, the centrifugation time, acceleration time, ramp up time, deceleration time, and the temperature in a centrifuge.

A centrifugation parameter is assigned to samples according to the present invention. Such a centrifugation parameter specifies at least one operation parameter of a centrifuge. When a particular centrifuge is e.g. set to operate at a specific speed, centrifugation intensity can be varied by choosing different centrifugation durations (e.g. 5 minutes for samples which undergo a clinical chemistry analysis and 10 minutes for a sample for coagulation testing). In many practical cases a particular centrifugation parameter would, however, invoke a centrifugation protocol which comprises a speed or force and a duration. The centrifugation protocol may further comprise the ramp up of the centrifugation speed or even centrifugation at different speeds with the same samples loaded.

A centrifuge operates in accord to a particular centrifugation protocol by spinning a rotor containing the sample at a particular speed resulting in a particular centrifugal force for the particular time at a particular temperature as specified by the centrifugation parameters of the centrifugation protocol.

The most important centrifugation parameters which determine the centrifugation intensity are centrifugation time and the centrifugation speed. In the context of centrifuging samples in a laboratory, the terms 'centrifugation speed' and 'centrifugal force' are often used synonymously as the centrifugal force can be calculated from a given centrifugation speed and vice versa. A centrifugal force is executed on a body if said body, e.g. a biological sample in a centrifuge bucket of a centrifuge, is moving a circular path (is centrifuged around a fixed axis). The centrifugal force pushes the body away from the center of the circular path. The higher the centrifugation speed of the centrifuge, usually measured in rotations per minute rpm or in meters per second, the higher the centrifugal force executed on the centrifuged body. The unit rpm indicates the number of turns a centrifuge performs per unit of time, e.g. within a minute. The centrifugation speed measured in meters per second indicates the length of the path a centrifuged sample moves along a circle around the axis of the centrifuge, wherein the radius of said circle is typically the radius of the centrifuge rotor or the distance between the sample bucket from the axis of the centrifuge. The magnitude of the centrifugal force F given a particular centrifugation speed v is given by the formula *F* = *mv*² / *r,* where m is the mass of the body, e.g. a sample, [kg], v is the speed of the body [meter per second], and r is the radius [meter] of the centrifuge. Alternatively, *F* = *mω²r* where ω is the angular velocity.

Coagulation testing requires higher centrifugation intensity than clinical chemistry analysis, because the number of cells or particles remaining in the plasma being acceptable for coagulation analysis is smaller than for clinical chemistry analysis.

The centrifugation intensity is a value which is primarily determined by the centrifugation time and centrifugal force or a combination of both parameters. In accordance with the present invention it is not necessary to determine an exact centrifugation intensity as it is only important to compare centrifugation intensities of samples loaded or to be loaded into the centrifuge.

The centrifugation parameter of highest centrifugation intensity is determined by comparing all centrifugation parameters having been assigned to each sample loaded into the workcell with each other. The 'centrifugation parameter of highest centrifugation intensity' is therefore determined by comparing the centrifugation parameters having been assigned to samples loaded or to be loaded into the workcell system:

A centrifugation parameter of highest centrifugation intensity is the centrifugation time of that very sample having assigned the longest centrifugation time of all samples to be centrifuged, provided the centrifugal force of said samples are equal. Analogously, centrifugation protocol of highest centrifugation intensity is the centrifugation protocol based on centrifugation parameters of that very sample having assigned the longest centrifugation time of all samples to be centrifuged, provided the centrifugal force of said samples are equal.

A centrifugation parameter of highest centrifugation intensity is the centrifugal force of that very sample having assigned the highest centrifugal force value of all samples to be centrifuged, provided the centrifugation time of said samples are equal. Analogously, a centrifugation protocol of highest centrifugation intensity is the centrifugation protocol based on centrifugation parameters of that very sample having assigned the highest centrifugal force value of all samples to be centrifuged, provided the centrifugation time of said samples are equal.

In case a first sample of the samples to be centrifuged has assigned a longer centrifugation time than a second sample while the second sample has assigned a higher centrifugal force value, it has to be determined experimentally which of those parameters is to be considered as the parameter of highest centrifugation intensity and which centrifugation parameters constitute the centrifugation protocol of highest centrifugation intensity. Alternatively, a person skilled in the art may decide based on his expert knowledge which centrifugation parameter is to be considered as the parameter of highest centrifugation intensity.

In the context of blood sample analysis, in preferred embodiments of the invention the centrifugation time acts as parameter of highest centrifugation intensity and determines the centrifugation protocol according to which serum samples and coagulation samples are centrifuged together within one centrifuge. As a result, the serum samples are centrifuged for a longer time if they are loaded into a centrifuge together with coagulation samples. The overall turnover time of the workcell system, however, is reduced.

The moment in time at which the comparison of centrifugation parameters of different samples is executed depends on the embodiment of the invention.

According to some embodiments of the invention, the comparison of samples is executed after having loaded the sample into a centrifuge. According to further embodiments, the comparison is executed during the process of loading the samples into the centrifuge of the workcell system. Said embodiments are particularly advantageous as it can be checked beforehand and hence guaranteed that all samples loaded into the sample workcell are compatible with the centrifugation protocol of highest centrifugation intensity.

According to further embodiments of the invention, the comparison of centrifugation parameters having been assigned to the samples loaded into the workcell is executed before the samples are loaded into the centrifuge. Said embodiments are advantageous in scenarios according to which the samples are to be directed to different buffer areas or wherein samples being incompatible to a centrifugation parameter of highest centrifugation intensity of other samples have to be prevented from being loaded into the centrifuge together with the other samples.

**Table 1:**

| **sample tube type** | **Added substances** | **sample type (according to analysis type requested for the sample);** | **possible analyses** |
|---|---|---|---|
| I | **contains a clot activator** Clot activator accelerates clotting. | serum sample | clinical chemistry on serum (determining glucose/ion/protein level etc.); immunology; routine blood donor screening; diagnostic testing for infectious diseases |
| II | **Contains a clot activator and gel** Gel density between density of blood serum and of the blood cells. Gel assists in separating serum and blood cells after centrifugation. Gel | serum sample | clinical chemistry on serum (determining glucose/ion/protein level etc.); immunology; routine blood donor screening; diagnostic testing for infectious |
| | prevents substance exchange between blood cell and serum. | | diseases |
| III | **Contains anticoagulant EDTA** K2-EDTA does not distort blood cells and is therefore the preferred anti-coagulans for hematological analyses. | hematological samples (whole blood) | clinical hematology examinations of blood cells; routine blood donor screenings; |
| IV | **Contains anticoagulants: Heparin, Lithium, Heparin Sodium and gel** Gel density is between density of blood plasma and of the blood cells. Gel assists in separating plasma and blood cells after centrifugation. Gel prevents substance exchange between blood cell and plasma. | plasma sample | clinical chemistry on plasma (determining glucose/ion/protein level etc.); immunology; routine blood donor screening; diagnostic testing for infectious diseases; some items of hemorrheology |
| V | **Contains thrombin,** a rapid clot activator | STAT serum sample | rapid STAT serum analysis |
| VI | **Contains anticoagulants citrate** Citrate binds the calcium of the blood sample. | citrate- plasma sample | Coagulation analyses: adding calcium allows blood to clot again; determination of e.g. the clotting time; platelet function assays; |
| VII | **Urine tubes** | urine sample | Chemical analysis on urine samples |

**Table 2:**

| **sample tube type** | **Recommended**/**Optimal centrifugation parameters** |
|---|---|
| II | centrifugal force: 2000 g centrifugation time: 5 min |
| IV | centrifugal force: 2000 g centrifugation time: 5 min |
| VI | centrifugal force: 3000 g centrifugation time: 10 min |
| VII | centrifugal force: 1200 g centrifugation time: 10 min |

Typically, a clinical laboratory has to execute a multitude of analytical tests on a multitude of blood samples collected in different sample tube types according to different optimum centrifugation protocols each day, wherein the sequence and number of analysis requests and, connected thereto, the requested centrifugation protocol, is not known in advance. In addition, there may exist samples which need to be very urgently processed and analyzed as the result their analysis is of life-crucial importance for a patient, so called 'STAT' samples. In a clinical laboratory associated e.g. to a hospital, the design of an optimal workcell system being capable to flexibly centrifuge any kind of sample according to its respective optimal centrifugation protocol for a particular analysis which is in addition operable to process STAT samples preferentially is therefore a highly complex task. The solution provided by current state-of-the art systems is to physically separate samples according to their recommended centrifugation protocols and to direct each class of samples to different centrifuges. For each of said centrifuges, a different centrifugation protocol has to be established. Said approach greatly increases the number of centrifuges required. Other systems sequentially process different sample classes, wherein the established centrifugation protocol is changed upon loading samples with a different recommended centrifugation protocol into the centrifuge. This is also sub-optimal, because in case one particular sample type assigned to a particular centrifugation protocol and corresponding to a particular type of analysis is requested only rarely, the centrifuge may not be filled to its capacity while samples requiring other centrifugation protocols may have to be collected in a buffer area.

Although table 1 lists a set of tube types, the type of a sample is not determined or characterized by the tube it is contained in but rather by the type of analysis requested to be executed on a sample. Correspondingly, a serum sample is a blood sample for which a clinical chemistry or immunology analysis was requested and from which serum is to be prepared prior to said requested analysis. A plasma sample is a blood sample for which a clinical chemistry or immunology analysis was requested and from which plasma is to be prepared prior to said analysis. A coagulation sample is a blood sample for which a coagulation test was requested. A STAT serum sample is a blood sample for which a rapid clinical chemistry or immunology analysis was requested and for which in very short time serum is requested to be prepared from the sample. In several cases, blood samples are collected from a patient after an analysis request was specified or in the knowledge that a particular analysis request for a particular type of analysis will be requested in the future. Accordingly, the blood is collected in sample tubes being specially adapted for preparing serum or plasma for the requested kind of analysis. It may be, however, that the same tube type is used for different sample types. In any case, the centrifugation parameter assigned to a biological sample depends on the requested analysis type. In a laboratory where the tube type is a clear indicator of the kind of analytical procedure required for a sample, also the tube type may be used by embodiments of the invention to determine which centrifugation parameter is to be assigned to a sample.

If a sample is centrifuged for a longer time or according to a higher centrifugal force than it is generally recommended for preparing a sample for a particular kind of analysis, the quality of the analysis result may be negatively affected. One possible reason is that the cell membranes of blood cells may be damaged, resulting in hemolysis, an effect which negatively interferes with several analytical tests. It may also be the case that the gel barrier of vails used to separate the serum/plasma from the clot/cells is destroyed by a centrifugation of higher intensity.

The present invention is based on the unexpected observation that for several types of samples and sample tubes, a deviation from the recommended centrifugation protocol within a particular value range does not have negatively consequences on the quality of the analysis results obtained on said samples. Further it has been found that the sample tubes for lower centrifugation intensity can be used for higher centrifugation intensities as well without destruction of the tubes.

In particular the observation, that a centrifugal force as employed for coagulation samples does not have a negative impact on the analysis quality of other types of analysis allows the creation of an improved workcell system allowing the centrifugation of multiple samples to be used in different analyses and requiring different centrifugation protocols within one centrifuge.

Although the principles of the present invention are in the following described in the context of blood sample analysis, the described embodiments are merely illustrative of the principles and applications of the present invention. It is therefore to be understood that numerous modification may be made regarding the type of biological sample to be centrifuged (urine, saliva, cerebral spinal liquor etc), regarding the centrifugation parameters applicable to a particular type of sample and regarding the kind of analytical test for which a sample is centrifuged in a workcell.

Workcell systems according to embodiments of the invention are able to reduce the overall turnaround time of samples to be prepared for analysis. Said workcell systems allow to avoid situations according to which a centrifuge not loaded to its full capacity is used to centrifuge samples of one particular centrifugation parameter set while other samples having assigned another recommended sets of centrifugation parameters are collected in a buffer area of the workcell. According to said embodiments, a centrifuge having only a few of its buckets occupied by samples requiring a protocol of higher centrifugation intensity can be filled to its capacity with samples requiring a centrifugation protocol of lower centrifugation intensity.

According to other embodiments of the invention, a centrifuge in which only a few of the centrifuge buckets are occupied by samples requiring a protocol of low centrifugation intensity can be filled to its capacity with samples requiring a centrifugation protocol of higher centrifugation intensity.

According to embodiments of the invention, a centrifuge in which only a fraction of its buckets is filled by coagulation samples (type VI sample tube type) can be filled to its capacity with blood samples to be used for other analytical tests, e.g. clinical chemistry analyses. Coagulation samples are in general not as frequently requested as clinical chemistry analyses. The option to load samples of other types into centrifuges having established a coagulation sample protocol of higher centrifugation intensity is therefore a feature of significant practical relevance and economic impact.

According to a further beneficial aspect of the invention, the number of centrifuges required can be reduced by centrifuging samples having assigned different centrifugation protocols within one single centrifuge according to the protocol with higher centrifugation intensity.

Embodiments of the invention provide for an automated sample workcell system having a sample conveyor which connects at least one centrifuge to a sample input station. The term 'conveyor' in the context of the present application refers to any kind of conveyor belt, robotic arm or device being operable to transport samples from the sample input station to the centrifuge and load the samples into the centrifuge.

According to some embodiments of the invention, the sample input station is an integral part of the centrifuges of the workcell system. According to said embodiments, the conveyor is a component of the centrifuge transporting the sample from the sample input station of the centrifuge to the centrifuge buckets.

Each sample is marked by a unique identifier, e.g. a bar code, a matrix code or by a combination of a unique sample rack code and a unique position of the sample within said sample rack. In a first step, the sample input station receives samples to be prepared for a particular, requested analysis. A centrifugation parameter is assigned to each of the received samples. The assignment may likewise, depending on the embodiment of the invention, be executed within the workcell by a different workcell component or may be executed on the sample in advance (before the sample is loaded into the workcell). According to preferred embodiments of the invention, the centrifugation parameter is assigned to the samples before the samples are loaded into the workcell system at the moment when an analysis request is entered into a data management system. The system then automatically assigns a centrifugation parameter in accordance with the one or more analytical tests specified in the analysis request. For example, if a coagulation test is requested, the data management system would assign centrifugation parameters adapted to prepare a sample for coagulation analysis to the requested sample(s).

In an analysis request for a particular patient often clinical, immunological and coagulation tests are specified. Typically blood is then drawn from the patient into different sample tubes, e.g. one tube for clinical chemistry and immunological tests and one for coagulation testing. Occasionally these tubes are all marked with the same patient specific barcode. Accordingly the analytical system would then need to distinguish these tubes of the same patient which can be done by e.g. tube type (including the tube closure) of a marking on the tubes. The data management system would then assign centrifugation parameters to the tubes according to the analytical tests to be made.

Alternatively the assignment of centrifugation parameters can also be executed manually e.g. by the operator of the sample workcell.

According to embodiments of the invention, the assignment is executed automatically by a 'parameter assignment module' when the samples are received by the input station of the workcell system. The assignment module can be implemented in the form of a rules engine or an equivalent computer implemented method. Each assignment can be stored e.g. as an entry in a database connecting a sample identifier with one or multiple sample parameters.

The assignment of centrifugation parameters to a sample can depend on information contained in an analysis request (i.e. an order, a request to execute an analysis of a particular type on a particular sample) received by the workcell system. An analysis request may be entered manually, e.g. in the form of submitting an electronic or paper based form. An analysis request may be entered directly in the workcell system via a man-machine interface, e.g. a touch screen, or via a remote computer connected to the laboratory intranet. The analysis request according to embodiments of the invention is managed and transferred to the workcell system by a laboratory's middleware or a laboratory information system.

The assignment of centrifugation parameters to a sample can also depend on information read from a label of a sample or from the cap of a sample.

According to other embodiments of the invention, the color of the sample cap or the label of the sample, e.g. a bar code, may be read and used as indicator of the centrifugation parameter to be assigned to the sample. The parameter assignment module checks, whether data contained in an analysis request or sample label fulfills a particular condition and assigns the centrifugation parameter in dependence on said condition. For example, a condition applied on an analysis request could comprise the condition that the type of the requested analysis is equal to a particular analysis type, e.g. 'coagulation test'. In case the condition is fulfilled and a 'coagulation test' was requested for a sample of a particular patient, the requested sample of said patient is assigned a set of centrifugation parameters comprising a centrifugal force of 3000 g and a centrifugation time of 10 minutes. Likewise, the condition could be applied on data read out from the label of a sample, e.g. the sample type. If the condition that a received sample is of type 'urine sample' is fulfilled, then one or multiple centrifugation parameters are assigned to the received sample.

The step of assigning a centrifugation parameter to a sample comprises, according to embodiments of the invention, the step of determining, whether a sample has already been centrifuged or not. This information may be retrieved from the laboratory information system (LIS) of the laboratory operating the workcell system, from software module being part of the middleware of the laboratory or a standalone software application for managing data associated with the processing and analysis of biological samples. This check ensures that a sample is not unnecessarily centrifuged a second time and helps to save centrifugation resources.

According to further embodiments of the invention, multiple centrifugation parameters can be assigned to a sample, e.g. a particular centrifugation time and a particular centrifugal force. To simplify matters, most examples provided in the following refer to the assignment of one centrifugation parameter to a sample.

According to preferred embodiments, the assigned centrifugation parameter is derived from the set of recommended centrifugation parameters of the manufacturer of the sample tubes used, is based on the technical knowhow of the laboratory, on textbook knowledge or knowledge obtained from scientific and technical journals. Usually, the centrifugation protocol assigned is considered as optimal for a sample or a particular analysis, ensuring that the desired analysis can be carried out on the centrifuged sample components and will return valid results. Optimum centrifugation parameters also ensure that the centrifugation time is not longer than necessary to prepare a sample for a particular analysis to save energy and avoid unnecessary long centrifugation times.

In a next step, the received samples are transported automatically by the conveyor to the at least one centrifuge of the workcell system.

A controller, e.g. a software or firmware component of the workcell, compares the centrifugation parameters having been assigned to each of the samples. According to typical use case scenarios, the samples loaded to the centrifuge have assigned different centrifugation parameters. The controller determines, as a result of the comparison, the centrifugation parameter of highest centrifugation intensity. The controller can be implemented as integral component of the workcell system, as a standalone software application or as software module being integrated to the middleware or LIS of the laboratory running the workcell system.

Finally, the samples are loaded into the centrifuge and centrifuged with the centrifugation protocol according to the centrifugation parameter of highest centrifugation intensity.

For example, samples received by the sample input station could be whole blood samples for preparing serum for clinical chemistry having assigned a centrifugal force of 2000 g and a centrifugation time of 5 minutes, whole blood samples for preparing plasma in type IV sample tubes having assigned a centrifugal force of 2000 g and 5 minutes and coagulation samples having assigned a centrifugal force of 3000 g and 10 minutes. The controller determines that the centrifugation parameters 'centrifugation time=10 min' and 'centrifugal force=3000g' assigned to the coagulation samples determine the centrifugation protocol of highest centrifugation intensity.

In case only samples having assigned the same centrifugation parameters are to be centrifuged, all samples are centrifuged according to their assigned centrifugation parameters.

According to some embodiments of the invention, the centrifugation protocol of highest centrifugation intensity comprises a centrifugal force of 3000 g and centrifugation duration of 10 minutes, the centrifugation parameters of said protocol having been assigned to coagulation samples.

According to some embodiments of the invention, the centrifugation protocol of highest centrifugation intensity comprises a centrifugal force of 2000 g and a centrifugation duration of 5 minutes, the centrifugation parameters of said protocol having been assigned to serum or plasma samples for clinical chemical analysis.

According to some embodiments of the invention, the centrifugation protocol of highest centrifugation intensity comprises a centrifugal force of 1200 g and a centrifugation duration of 10 minutes, the centrifugation parameters of said protocol having been assigned to urine samples.

According to some embodiments of the invention, the samples are loaded into the centrifuge in the order they are received by the sample input station or according to the order they are transported to the at least one centrifuge of the sample workcell system by the conveyor. When the centrifuge is loaded to its capacity, receives an explicit centrifugation command or after the elapse of a specified period of time, the centrifuge is operated in accord with the centrifugation protocol according to the centrifugation parameter of highest centrifugation intensity of the samples loaded into the centrifuge.

According to further embodiments of the invention, the sample workcell system further comprises at least a first and a second buffer area for collecting samples having assigned different sets of centrifugation parameters or differing from each other in regard to their average occurrence frequency. Samples having assigned a centrifugation parameter specifying a high centrifugation intensity are collected in a first buffer area while all other samples having assigned centrifugation parameters of a lower centrifugation intensity are collected in at least a second buffer area. According to further embodiments of the invention, the criteria determining to which buffer area a sample is sent is the type of sample (urine or blood, type II or VII tube, etc.), the degree of urgency of a sample (STAT samples are very urgent, and STAT status may be indicated by the color of the tube or tube cap, the bar code label or a specific input section etc.), the average quantity of a particular sample type, the average frequency of receiving a request for a particular pre-analytical procedure and the like. According to preferred embodiments of the invention, the STAT status of a sample is determined by parameters contained in an analysis request.

For example, in case STAT samples are received by the workcell system, the STAT samples are collected in the first buffer area. Other samples collected in the second buffer area are used to fill up unoccupied buckets of the centrifuge.

According to further embodiments, samples whose sample type or whose corresponding pre-analytical procedure is on average requested less frequently are collected in the first buffer area. The samples having been collected in the first buffer area are loaded into the at least one centrifuge of the sample workcell system after a termination condition is fulfilled. Said termination condition can be the elapse of a specified time period, the occurrence of a specified time in day, the collection of a specified number of samples in the first or second buffer area, an explicit centrifugation command etc. Only in case the centrifuge has not been loaded to its capacity by the samples collected in the first buffer area, samples of the second buffer area are transferred to the unoccupied centrifuge buckets. After having loaded the centrifuge to its capacity or after having loaded samples collected in the second buffer area to the centrifuge, the centrifuge is started in accord with the centrifugation protocol comprising the centrifugation parameter of highest centrifugation intensity.

The termination condition for STAT samples may differ from that of other samples: the minimum number of STAT samples to be collected in the first buffer area may be smaller than for other samples and the time span to elapse before initiating centrifugation may be shorter.

In respect to the example given beforehand, coagulation samples are collected in the first buffer area, because they have assigned a centrifugation parameter of higher intensity than clinical chemical analysis samples. In most laboratories, coagulation samples are in addition processed less frequently than clinical chemistry samples (type I and II sample tubes). Said clinical chemistry samples are collected in the second buffer area. After a termination condition is fulfilled, the coagulation samples are loaded by the conveyor from the first buffer area to the centrifuge. In case centrifuge buckets remain unoccupied, clinical chemistry samples are transferred from the second buffer area to the unoccupied centrifuge buckets.

The examples described beforehand are examples wherein samples contained in different tube types as listed in table 2 (tube type II for clinical chemistry, tube type IV for some items of hemorrheology, tube type VI for coagulation tests, tube type VII for analyses on urine samples) can be centrifuged together according to the centrifugation parameters of higher centrifugation intensity, in this case, 3000 g and 10 minutes as assigned to the coagulation samples. In various laboratories, there may exist sample types and analysis types according to which centrifuging the sample to be analyzed with high centrifugation intensity would invalidate the analysis result or make the execution of the desired analysis on said sample impossible. For example, EDTA-blood samples collected in type III sample tubes may be used to examine the blood cells, e.g. their shape and number per volume unit. For said kind of analysis, a centrifugation could render the execution of said analysis impossible.

According to further embodiments of the invention, the controller determines whether samples exist in the set of samples received by the workcell which are incompatible with the centrifugation parameter of highest centrifugation intensity assigned to some of the received samples. A sample is incompatible with the highest centrifugation parameter if a centrifugation of said sample with a centrifugation protocol specified by said centrifugation parameter would result in the invalidation or a deterioration of the quality of the analysis results to be obtained from said samples or would make the execution of the desired analysis on said samples impossible. In case the controller detects samples being incompatible to the centrifugation parameter of highest centrifugation intensity, said samples are prohibited from being loaded into the centrifuge. Depending on the embodiment of the invention, the one or multiple samples having been prohibited from being loaded into the at least one centrifuge together with samples assigned to incompatible centrifugation parameters are collected in a third buffer area. Said samples are in the following referred to as 'incompatible' samples. After the samples having assigned a centrifugation parameter of highest centrifugation intensity and the samples not being negatively affected by a centrifugation in accord with said parameter of highest centrifugation intensity have completed centrifugation, a new centrifugation protocol is established at the centrifuge, the 'incompatible' samples are transferred from the third buffer area to the centrifuge and centrifuged according to the centrifugation parameters assigned to the incompatible samples.

According to further embodiments, said 'incompatible' samples are not collected in a third buffer area but rather transferred to a second centrifuge of the workcell system. A centrifugation protocol specified by the centrifugation parameters assigned to the 'incompatible' samples is established at the second centrifuge and the centrifugation started according to the established protocol.

Embodiments of the invention provide for an improved workcell system wherein samples having assigned different centrifugation parameters do not necessarily have to be separated either manually or automatically. Rather, samples having assigned different centrifugation parameters can be centrifuged together within the at least one centrifuge of the workcell system in accord to the centrifugation protocol of highest centrifugation intensity of the samples loaded into the workcell system. The protocol of highest centrifugation intensity is determined and established at the at least one centrifuge automatically. As a result, fewer centrifuges are required, the costs of the workcell system are reduced and the processing of samples having assigned different centrifugation protocols is facilitated and accelerated.

According to further embodiments of the invention, the workcell system is operable to determine its workload or to receive workload information from a user of the system, e.g. the operator. In case the workload of the system is low and the workcell system comprises a sufficient number of centrifuges, the workcell directs samples having assigned different centrifugation parameters to different centrifuges having established different centrifugation protocols. In case the workload is high, samples having assigned different sets of centrifugation parameters are centrifuged together according to the centrifugation protocol of higher centrifugation intensity. Samples can be loaded sequentially into the at least one centrifuge or by collecting samples of different types in different buffer areas at first and then loading the centrifuge preferentially with samples from the first buffer area.

After the samples have been centrifuged according to anyone of the embodiments described beforehand, they may be automatically or manually transferred to an analyzer, or may be further processed in one or more pre-analytical steps, e.g. decapping the sample tubes, taking aliquots of the centrifuged sample for subsequent analysis and in some cases also centrifuging the aliquot.

Further embodiments of the invention are particularly suited for usage in laboratories in which a multitude of samples have to be centrifuged and which may not necessarily have assigned compatible centrifugation parameters. Said embodiments operate based on a logical classification of samples based on their assigned centrifugation parameters. After the samples are classified into sub-sets of samples, multiple sample sub-sets are grouped together if they have compatible centrifugation parameters. Finally, the logical classes of samples are physically separated. Sub-sets of samples having assigned compatible centrifugation parameters are centrifuged together in a first centrifuge while samples having assigned different centrifugation parameters are centrifuged in parallel in a second centrifuge or in the first centrifuge after the first run of the centrifuge has completed. Said embodiments will be described in detail in the following.

Further examples not being part of the invention provide classes of compatible centrifugation parameters for particular analyses, e.g. in the form of database tables. Table 3 gives an example of sets of centrifugation parameters being optimal in order to prepare a biological sample for a particular analysis or group of analyses.

**Table 3**

| **analysis type** | **ID of centrifugation parameter** | **centrifugation parameter (optimal) for a particular analysis** |
|---|---|---|
| clinical chemistry analyses on serum samples | A | centrifugal force: 2000 g |
| clinical chemistry analyses on plasma samples | A | centrifugal force: 2000 g |
| Coagulation testing | B | centrifugal force: 3000 g |
| clinical chemistry analyses on urine samples | C | centrifugal force: 1200 g |
| Hematological analysis | D | No centrifugation |
| Separation of red and white blood cells | E | centrifugal force: 10.000 g |

**Table 4**

| **Class ID of compatible sets of centrifugation parameters** | **superior centrifugation parameter** | **subordinate centrifugation parameter** |
|---|---|---|
| I | B | A, C |
| II | A | C |

Table 4 provides classes I and II of compatible centrifugation parameters. Each class I-II comprises exactly one superior centrifugation parameter and one or multiple subordinate centrifugation parameters. A centrifugation parameter can be a superior parameter in one class (parameter A in Class II) and be a subordinate parameter of other classes (parameter A in Class I). In case a centrifuge is loaded solely with samples having assigned the same centrifugation parameter, e.g. solely with clinical chemistry analysis serum or plasma samples according to parameter A, the centrifugation protocol executed on said samples is based on parameter A. In case samples having assigned multiple different parameters are to be centrifuged, only samples having assigned compatible centrifugation parameters are loaded together into one centrifuge and are then centrifuged according to the superior centrifugation parameter of a class of compatible centrifugation parameters.

For example, in case multiple samples having assigned different parameters A, B and C are to be centrifuged, said samples are loaded together into centrifuge and centrifuged according to centrifugation parameter B which is the superior centrifugation parameter set of class I.

In case the set of samples to be centrifuged comprises samples having assigned either parameters A or C, then the set of samples to be centrifuged is loaded into the centrifuged and centrifuged according to parameter A.

In case the set of samples received by the sample input station comprises samples whose centrifugation parameter is incompatible to the centrifugation parameter assigned to other samples, e.g. samples for hematological analysis having assigned centrifugation parameter D specifying that no centrifugation is to be executed, said samples are prohibited from being loaded and centrifuged together with other samples.

The workcell system according to said examples operates as follows: at first the input station receives samples to be centrifuged. The parameter assignment module assigns a set of centrifugation parameters optimal for the kind of analysis to be executed on a sample to each sample. The assignment may depend on data contained in an analysis request or data specified in the label of the sample. What is considered an 'optimal' centrifugation parameter may vary between different laboratories. The samples are then logically classified into sub-sets of samples according to the assigned centrifugation parameters of the samples. Each sub-set of samples comprises at least one sample. In the next step, it is determined, which sub-sets of the received samples correspond to a centrifugation parameter belonging to a class of compatible centrifugation parameters. Only those sub-sets of samples are transferred to the centrifuge whose centrifugation parameter belongs to a class of compatible centrifugation parameters. In case the sample sub-sets can be assigned to different classes of compatible centrifugation parameters, that class of compatible centrifugation parameters is used comprising the largest number of samples. In case all received samples have assigned the same centrifugation parameter, said parameter is considered as superior centrifugation parameter. Finally, a centrifugation protocol is established at the centrifuge in accord with the superior parameter of the class of compatible centrifugation parameters determined in the previous step for loading samples with compatible centrifugation parameters into the centrifuge. All sub-sets of samples having assigned centrifugation parameters belonging to a class of compatible centrifugation parameters are then transferred to the centrifuge and centrifuged in accord with the superior centrifugation parameter of said class.

According to preferred examples, the superior centrifugation parameter is the centrifugation parameter of highest centrifugation intensity within a class of compatible centrifugation parameters.

According to further examples not being part of the invention, the sub-set of samples having assigned the superior centrifugation parameter is collected in a first buffer area while the sample sub-sets having assigned a subordinate centrifugation parameter are collected in a second buffer area. In the next step, the samples of the first buffer area are transferred to the centrifuge. In case buckets of the centrifuge are left unoccupied, they are filled in the next step with samples of the second buffer area provided that such samples are compatible with the superior centrifugation parameter. Finally, the centrifugation is operated in accord with the superior centrifugation parameter.

### Brief description of the drawings

In the following, embodiments of the invention are explained in greater detail by way of example, only making reference to the drawings in which:
- Figure 1: is a block diagram of a sample workcell,
- Figure 2: is a flowchart of a method for centrifuging samples with different centrifugation parameters in one centrifuge,
- Figure 3a: depicts the loading of samples with different centrifugation parameters into one centrifuge in the same order as received by the sample input station,
- Figure 3b: depicts the group wise loading of samples with different centrifugation parameters into one centrifuge,
- Figure 4: is a flowchart of a method for centrifuging samples, the method comprising the collection of samples in a first and a second buffer area, and
- Figures 5: is a flowchart of a method for centrifuging samples together in one centrifuge according to classes of compatible centrifugation parameters.

### Detailed description

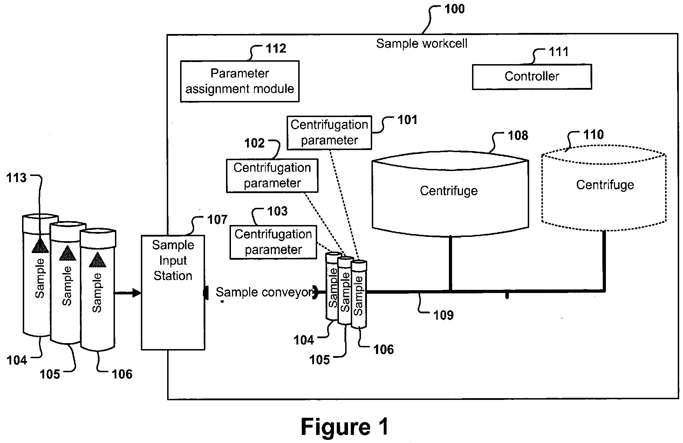

**Figure 1** is a block diagram of a sample workcell system 100 according to one embodiment of the invention. The workcell system 100 comprises a sample input station 107, at least one centrifuge 108, a sample conveyor 109 for automatically transporting biological samples 104, 105, 106, from a sample input station 107 to the at least one centrifuge 108. Some embodiments of sample workcell 100 may in addition comprise one or more further centrifuges 110 which are also connected to the sample input station 107 via the conveyor 109. Upon receiving a samples by the sample input station 107, parameter assignment module 112 assigns each sample 104, 105, and 106 a centrifugation parameter 101, 102, 103. For example, sample 104 is assigned centrifugation parameter 103 and sample 106 is assigned centrifugation parameter 101. The assignment can depend on data contained in an analysis request (i.e. an order) or on information specified by the label 113 attached to each sample. The label may be a unique code of the sample, e.g. a bar code or a matrix code etc. or a combination of unique code of a sample rack in combination with a position of a sample within said rack. The controller 111 is operable to compare the centrifugation parameter 101, 102, 103 having been assigned to each sample 104, 105, 106 and to determine the centrifugation protocol with the highest centrifugation intensity of all samples received by sample input station 107. After having loaded the samples into centrifuge 108, they are centrifuged according to the highest centrifugation intensity assigned to any of the samples loaded into centrifuge 108.

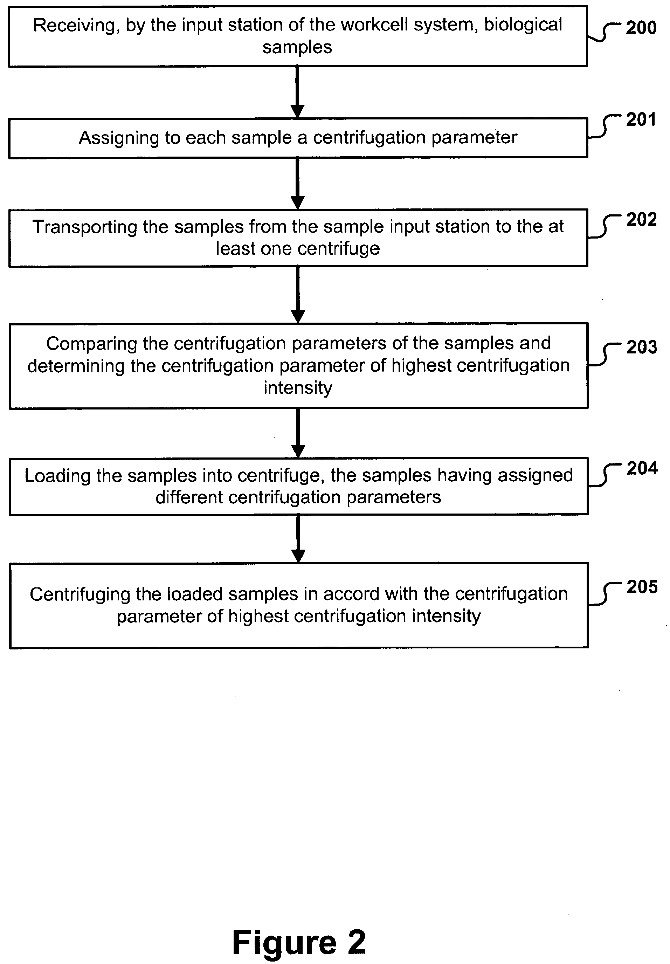

**Figure 2** is a flowchart of a method for centrifuging samples with different centrifugation parameters within one centrifuge 108. In step 200, the input station 107 receives biological samples. In step 201, to each sample a centrifugation parameter is assigned by the parameter assignment module 112. The centrifugation parameter may be the centrifugal force, the centrifugation time (i.e. duration), the temperature of the centrifuge and the like. In step 202, the samples are transported from the sample input station 107 to the at least one centrifuge 108. The controller 111 compares in step 203 the centrifugation parameters of the samples received in step 200 and determines the centrifugation parameter of highest centrifugation intensity. Depending on the embodiment of the invention, the samples can be located within or outside the centrifuge at the time of comparison. In step 204, the samples are loaded into the centrifuge, wherein the loaded samples have assigned different centrifugation parameters. Finally, the loaded samples are centrifuged in step 205 in accord with a centrifugation protocol of highest centrifugation intensity.

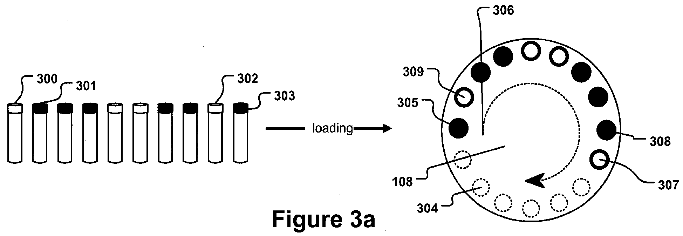

**Figure 3a** depicts the loading of samples with different centrifugation parameters into one centrifuge in the order as received by the sample input station 107. On the left side of figure 3a, a series of biological samples is depicted in the order as the samples of the series were loaded into the sample input station 107. The first sample loaded into sample input station is sample 303, followed by the sample 302. The last sample to loaded into the sample input station according to figure 3a is sample 300. Sample tubes with a black cap 301, 303 represent samples having assigned centrifugation parameters of higher centrifugation intensity, e.g. coagulation samples. Samples with a white cap 300, 302 represent samples having assigned centrifugation parameters of lower centrifugation intensity, e.g. serum samples. The centrifuge 108 is depicted on the right side of figure 3a from a bird's eye view. The dotted circles (e.g. 304) represent unoccupied centrifuge buckets. The first sample 303 to be loaded into the sample input station 107 is also the first sample to be loaded into the centrifuge 108 into bucket 305. The next sample 302 is loaded into bucket 309. The last sample 300 received by the sample input station is loaded into sample bucket 307. The loading of samples into the centrifuge is executed according to the depicted embodiment in a clockwise order starting from position 306. Centrifuge buckets loaded with serum samples 307, 309 are indicated as white circles with a thick black border.

Centrifuge buckets loaded with coagulation samples 308, 305 are indicated as black circles. The centrifuge 108 starts centrifuging after a specific period of time has elapsed, at the event of a particular time in the day, after all centrifuge buckets are occupied or after receiving an explicit centrifugation initiation signal. The centrifugation parameter of highest centrifugation intensity is determined by the controller 111 by comparing the centrifugation parameters of all samples. Finally, the centrifuge 108 has started according to a centrifugation protocol of highest centrifugation intensity.

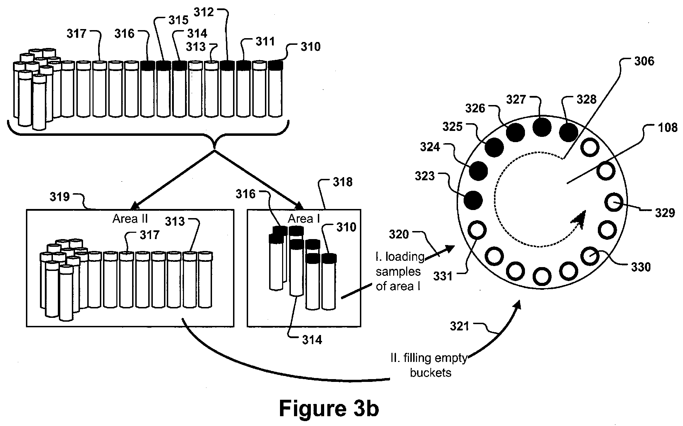

**Figure 3b** depicts the group wise loading of samples with different centrifugation parameters into one centrifuge. Similarly to the embodiment depicted in figure 3a, the samples 310-317 may be received by sample input station 107 in an arbitrary order. They may be received sequentially or may be received in the form of one or multiple sample racks. Nineteen serum samples, e.g. 313, 317, are depicted as sample tubes with white caps. Six coagulation samples 310, 311, 312, 314, 315 and 316 are depicted as sample tubes with black caps. Coagulation samples have assigned a centrifugation parameter of higher centrifugation intensity. According to the embodiment depicted in figure 3b, samples having assigned a centrifugation protocol with higher centrifugation intensity are collected in a first buffer area 318. Other samples, e.g. serum samples, are collected in a second buffer area 319. After a specific period of time has elapsed, at the event of a particular time in the day, after a certain number of samples was collected in the first or second buffer area or after the receipt of an explicit centrifugation initiation signal, all samples having been collected in the first buffer area 318 are loaded into centrifuge 108. The centrifuge buckets occupied by the six coagulation samples are depicted as black circles 323-328 of centrifuge 108. In the next step 321, empty buckets of centrifuge 108 are filled with samples having been collected in the second buffer area 319. The centrifuge 108 depicted in figure 3b is filled to its capacity by six coagulation samples and 10 serum samples. Centrifuge buckets occupied by a serum sample 329, 330 are depicted as white circles with thick black borders. The remaining nine serum samples may be transferred to a second centrifuge 110 or kept in the second buffer area 319 until the next run of the centrifuge 108.

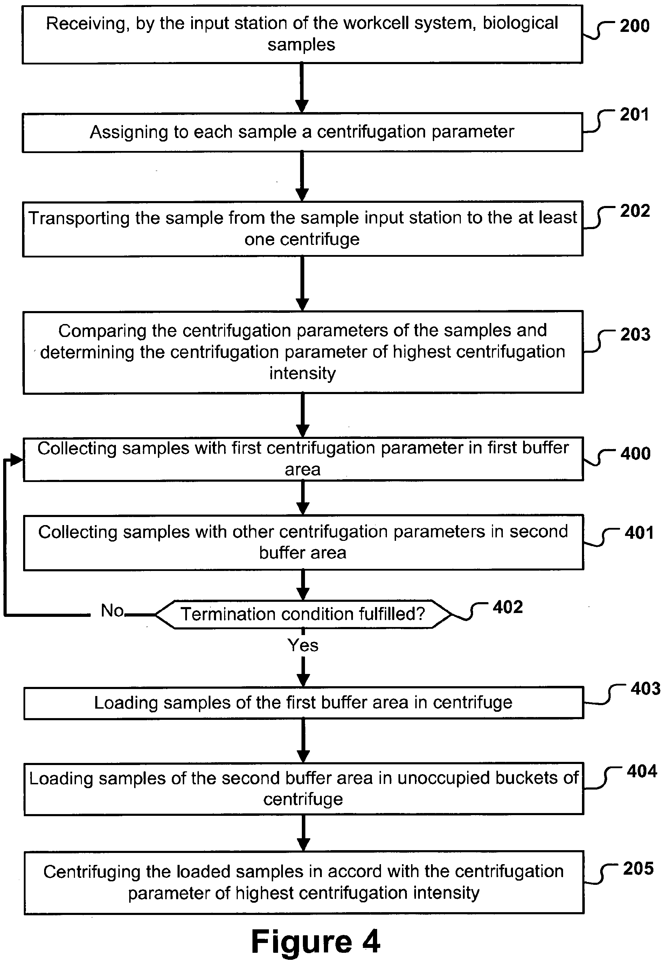

**Figure 4** is a flowchart of a method for centrifuging samples, the method comprising the collection of samples in a first and a second buffer area. The steps 200-203 are executed as described for figure 2. In step 400, samples having assigned a first centrifugation parameter are collected in the first buffer area 318. Samples having assigned other centrifugation parameters are collected in a second buffer area 319 according to step 401. In case a termination condition 402 is fulfilled, as many sample tubes are loaded from the first buffer area into the centrifuge 108 as present and as centrifuge buckets are available. In step 404, unoccupied buckets of centrifuge 108 are filled by loading the sample tubes from the second buffer area 319 into the centrifuge. The controller 111 determines the centrifugation parameter of highest centrifugation intensity and establishes a corresponding centrifugation protocol for centrifuge 108. In case no coagulation sample has been loaded into the workflow system, centrifuge 108 started in step 205 according to the centrifugation parameter having been assigned to the serum samples. Only in case also coagulation samples are loaded into centrifuge 108, serum samples as well as coagulation samples are centrifuged according to the centrifugation parameter having been assigned to the coagulation samples. The centrifugation parameter having been assigned to the coagulation samples is of higher centrifugation intensity than the centrifugation parameter assigned to the serum samples. The termination signal according to decision 402 can be the elapse of a specific period of time, the event of a particular time in the day, the collection of a predefined number of samples with them buffer area I or II or the receipt of an explicit centrifugation initiation signal.

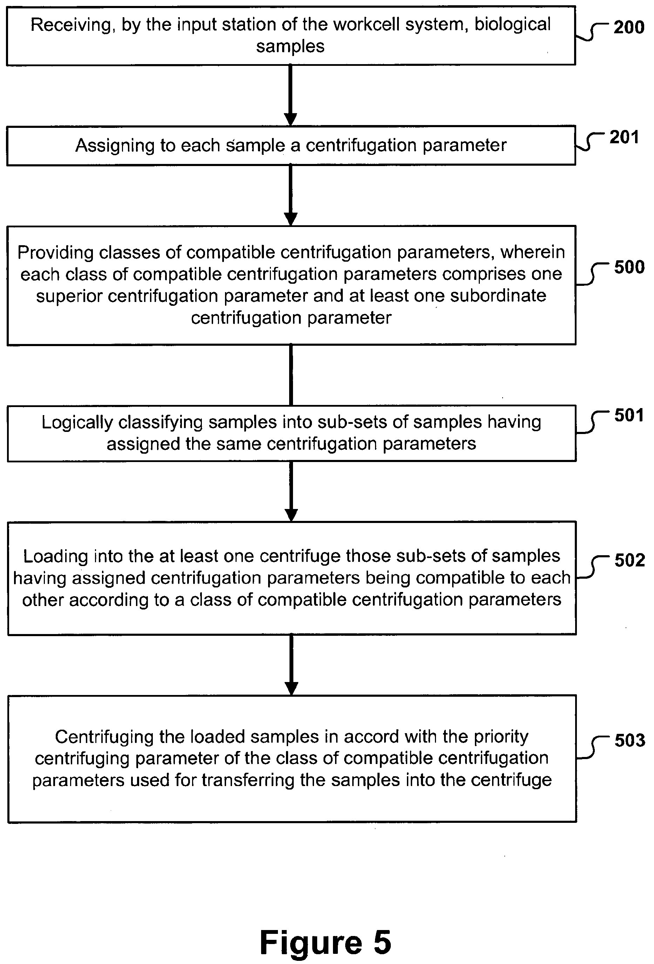

**Figures 5** is a flowchart of a method according to an example not being part of the invention. Said method is used for centrifuging samples together in one centrifuge according to classes of compatible sets of centrifugation parameters. In step 200, the input station 100 and 700 of the workflow system 100 receives multiple biological samples. In step 201, each sample is assigned a centrifugation parameter. In step 500, the workflow system provides classes of compatible centrifugation parameters, wherein each class of compatible centrifugation parameters comprises one superior centrifugation parameter and at least one subordinate centrifugation parameter. The classes of compatible centrifugation parameters can be provided e.g. by a relational database, by the configuration file or can be hard coded into an application software module. In step 501, the samples having been loaded into the workcell system in step 200 are logically classified into sub-sets of samples according to their assigned centrifugation parameter. All samples having been assigned to the same sub set of samples share the same set of centrifugation parameters. In step 502, selectively those sub-sets of samples are loaded into the at least one centrifuge 108 which have assigned centrifugation parameters being compatible to each other according to a class of compatible centrifugation parameters as depicted, for example, in table 4. In step 503, the samples having been loaded to the centrifuge are centrifuged in accord with the superior centrifugation parameter of the class of compatible centrifugation parameters used for transferring the sample into the centrifuge in step 502. In case only samples having assigned the same centrifugation parameter are received by the sample input station 107, the centrifugation parameter having been assigned to those samples by the parameter assignment module is considered as superior centrifugation parameter.

According to preferred examples, the superior centrifugation parameter of each class of compatible centrifugation parameters specifies a centrifugation protocol with higher centrifugation intensity than that centrifugation protocol specified by any of the subordinate centrifugation parameters of said class.

### List of Preference Numerals

- 100: sample workcell
- 101: centrifugation parameter
- 102: centrifugation parameter
- 103: centrifugation parameter
- 104: biological sample
- 105: biological sample
- 106: biological sample
- 107: sample input station
- 108: centrifuge
- 110: second centrifuge
- 111: controller
- 112: parameters assignment module
- 113: label
- 200-205: steps
- 300: serum sample
- 301: coagulation sample
- 302: serum sample
- 303: coagulation sample
- 304: unoccupied centrifuge bucket
- 305: centrifuge bucket occupied by coagulation sample 303
- 306: start loading samples
- 307: centrifuge bucket occupied by serum sample 300
- 308: centrifuge bucket occupied by coagulation sample 301
- 309: centrifuge bucket occupied by serum sample 302
- 310-312: coagulation samples

- 313: serum sample
- 314-316: coagulation samples
- 317: serum sample
- 318: sample buffer area I
- 319: sample buffer area II
- 320: step: loading samples of buffer area 318
- 321: step: filling empty bucket
- 322: centrifuge bucket
- 323-328: centrifuge buckets occupied by coagulation samples
- 329-331: centrifuge buckets occupied by serum samples
- 400-401: step
- 402: decision
- 403-405: steps
- 500-503: steps

## Claims

1. A computer-implemented method for operating an automated sample workcell (100), the workcell comprising a sample conveyor (109) connecting at least one centrifuge (108) to a sample input station (107), the method comprising
- receiving (200) samples (104, 105, 106) by the sample input station (107);
- assigning (201) to each sample a centrifugation parameter (101, 102, 103);
- transporting (202) each sample from the sample input (107) station to the at least one centrifuge (1.08);
- comparing (203) the centrifugation parameters (101, 102, 103) of the samples loaded or to be loaded into the centrifuge and determining the centrifugation parameter of highest centrifugation intensity;
the method being **characterized by**:
- loading (204) the samples into the centrifuge (108), the loaded samples comprising samples with different centrifugation parameters;
- centrifuging (205) the loaded samples in accord with a centrifugation protocol comprising the centrifugation parameter of said highest centrifugation intensity.

2. The computer-implemented method of claim 1, wherein the step of loading (204) the samples into the centrifuge comprises the sub-steps of
- collecting (400) samples with a first centrifugation parameter in a first buffer area;
- collecting (401) samples with a second centrifugation parameter in a second buffer area;
- determining (402), whether a termination condition is fulfilled for collecting samples in the first and second buffer area;
- loading (403), if the termination condition is fulfilled, the samples collected in the first buffer area into the centrifuge;
- filling (404) unoccupied centrifuge buckets with samples of the second buffer area;

3. The computer-implemented method according to claim 2, wherein the termination condition is selected from the group consisting of:
- the collection of a predefined number of samples with the first centrifugation parameter in the first buffer area,
- the occurrence of a particular time of day,
- the elapse of a predefined period of time since starting collecting the samples, and
- the receipt of a command for executing the centrifugation with the so far collected samples.

4. The computer-implemented method according to anyone of claims 2 or 3, wherein the samples with the first centrifugation parameter are samples occurring in lower quantity than samples with the second centrifugation parameter.

5. The computer-implemented method according to anyone of claims 2 or 3, wherein the samples in the first buffer area are samples having assigned a centrifugation parameter of higher centrifugation intensity than assigned to the samples in the second buffer area.

6. The computer-implemented method according to anyone of claims 1 - 5, wherein the centrifugation parameter of highest centrifugation intensity are samples for which a coagulation analysis request was received by the automated sample workcell.

7. The computer-implemented method according to anyone of claims 1 - 6, wherein the samples not having assigned a centrifugation parameter of highest centrifugation intensity but being centrifuged together with samples having assigned a centrifugation parameter with highest centrifugation intensity are selected from the group consisting of
- serum samples,
- plasma samples, and
- urine samples.

8. The computer-implemented method according to anyone of claims 1 - 7, wherein the assignment of a centrifugation parameter to each of the samples is executed by a rules engine.

9. The computer-implemented method according to anyone of claims 1 - 5, wherein the step of loading the samples into the centrifuge comprises the sub-steps of
- determining, whether samples exist among the received samples being incompatible with the centrifugation parameter of highest centrifugation intensity, wherein a sample is incompatible with the centrifugation parameter of highest centrifugation intensity if a centrifugation of said sample with a centrifugation protocol comprising said centrifugation parameter of highest centrifugation intensity would result in a quality reduction of the results generated on said sample;
- prohibiting samples being incompatible with the centrifugation parameter of highest centrifugation intensity from being loaded into the centrifuge together with the samples assigned the parameter of highest centrifugation intensity.

10. An automated sample workcell comprising:
- a sample input station for loading samples into the sample workcell,
- a parameter assignment module for assigning a centrifugation parameter to each sample;
- a controller for comparing the centrifugation parameters of the samples loaded or to be loaded into the centrifuge with each other and for determining, as a result of the comparison, the centrifugation parameter of highest centrifugation intensity;
- at least one centrifuge being operable to centrifuge the loaded samples in accord with a centrifugation protocol according to the centrifugation parameter of highest centrifugation intensity;
- a sample conveyor for transporting samples from the sample input station to the at least one centrifuge and for loading samples into the at least one centrifuge,
the automated sample workcell being **characterized by**:
the loaded samples comprising samples with different centrifugation parameters,
wherein the loaded samples are centrifuged with the centrifugation protocol according to the centrifugation parameter of highest centrifugation intensity.

11. The automated sample workcell (100) of claim 10, further comprising
- a first buffer area (318) for collecting samples of a first centrifugation parameter, wherein samples of the first type are samples having assigned a first centrifugation parameter of highest centrifugation intensity, and
- a second buffer area (319) for collecting samples having assigned a second centrifugation parameter,
wherein samples (104, 105, 106) of the first centrifugation parameter are automatically transferred by the sample conveyor (109) to the at least one centrifuge (108) after a termination condition is fulfilled, and wherein unoccupied centrifuge buckets (304) are filled with samples of the second centrifugation parameter.

12. The automated sample workcell (100) of anyone of claims 10 - 11, further comprising at least one analyzer, wherein the sample conveyor (109), after the centrifugation of samples of the first sample type and samples of other types in the at least one centrifuge according to a centrifugation protocol comprising the centrifugation parameter of the highest centrifugation intensity, is operable to automatically transfer the samples to the at least one analyzer.

## Patentansprüche

1. Computerimplementiertes Verfahren zum Betreiben einer automatisierten Probenarbeitszelle (100), wobei die Arbeitszelle einen Probenförderer (109) aufweist, der wenigstens eine Zentrifuge (108) mit einer Probeneingabestation (107) verbindet, wobei das Verfahren Folgendes aufweist
- Erhalten (200) von Proben (104, 105, 106) durch die Probeneingabestation (107),
- Zuordnen (201) eines Zentrifugationsparameters (101, 102, 103) zu jeder Probe;
- Transportieren (202) jeder Probe von der Probeneingabestation (107) zu der wenigstens einen Zentrifuge (108);
- Vergleichen (203) der Zentrifugationsparameter (101, 102, 103) der in die Zentrifuge geladenen oder zu ladenden Proben und Bestimmen des Zentrifugationsparameters höchster Zentrifugationsintensität;
wobei das Verfahren **gekennzeichnet ist durch**:
- Laden (204) der Proben in die Zentrifuge (108), wobei die geladenen Proben Proben mit verschiedenen Zentrifugationsparameter aufweisen;
- Zentrifugieren (205) der geladenen Proben in Übereinstimmung mit einem Zentrifugationsprotokoll, das die Zentrifugationsparameter der genannten höchsten Zentrifugationsintensität aufweist.

2. Computerimplementiertes Verfahren nach Anspruch 1, wobei der Schritt des Ladens (204) der Proben in die Zentrifuge die folgenden Teilschritte aufweist
- Sammeln (400) von Proben mit einem ersten Zentrifugationsparameter in einem ersten Zwischenspeicherbereich;
- Sammeln (401) von Proben mit einem zweiten Zentrifugationsparameter in einem zweiten Zwischenspeicherbereich;
- Bestimmen (402), ob eine Beendigungsbedingung für das Sammeln von Proben im ersten und im zweiten Zwischenspeicherbereich erfüllt wird;
- Laden (403) der im ersten Zwischenspeicherbereich gesammelten Proben in die Zentrifuge, wenn die Beendigungsbedingung erfüllt wird;
- Füllen (404) unbelegter Zentrifugenbecher mit Proben des zweiten Zwischenspeicherbereichs;

3. Computerimplementiertes Verfahren nach Anspruch 2, wobei die Beendigungsbedingung aus der Gruppe bestehend aus Folgenden ausgewählt wird:
- der Sammlung einer vordefinierten Anzahl von Proben mit dem ersten Zentrifugationsparameter im ersten Zwischenspeicherbereich,
- dem Stattfinden einer besonderen Tageszeit,
- dem Verstreichen einer vordefinierten Zeitspanne seit Beginn des Sammelns der Proben und
- dem Erhalt eines Befehls zum Ausführen der Zentrifugation mit den bisher gesammelten Proben.

4. Computerimplementiertes Verfahren nach einem der Ansprüche 2 oder 3, wobei die Proben mit dem ersten Zentrifugationsparameter Proben sind, die in geringerer Menge auftreten als Proben mit dem zweiten Zentrifugationsparameter.

5. Computerimplementiertes Verfahren nach einem der Ansprüche 2 oder 3, wobei die Proben im ersten Zwischenspeicherbereich Proben sind, denen ein Zentrifugationsparameter höherer Zentrifugationsintensität zugeordnet ist, als den Proben im zweiten Zwischenspeicherbereich zugeordnet ist.

6. Computerimplementiertes Verfahren nach einem der Ansprüche 1 bis 5, wobei der Zentrifugationsparameter höchster Zentrifugationsintensität Proben sind, für die von der automatischen Probenarbeitszelle eine Gerinnungsanalyseanfrage erhalten wurde.

7. Computerimplementiertes Verfahren nach einem der Ansprüche 1 bis 6, wobei die Proben, denen kein Zentrifugationsparameter höchster Zentrifugationsintensität zugeordnet wurde, die aber zusammen mit Proben zentrifugiert werden, denen ein Zentrifugationsparameter mit höchster Zentrifugationsintensität zugeordnet ist, aus der Gruppe bestehend aus Folgenden ausgewählt werden:
- Serumproben
- Plasmaproben und
- Urinproben.

8. Computerimplementiertes Verfahren nach einem der Ansprüche 1 bis 7, wobei die Zuordnung eines Zentrifugationsparameters zu jeder der Proben von einer Regeln-Engine ausgeführt wird.

9. Computerimplementiertes Verfahren nach einem der Ansprüche 1 bis 5, wobei der Schritt des Ladens der Proben in die Zentrifuge die folgenden Teilschritte aufweist
- Bestimmen, ob es unter den erhaltenen Proben Proben gibt, die mit dem Zentrifugationsparameter höchster Zentrifugationsintensität unverträglich sind, wobei eine Probe mit dem Zentrifugationsparameter höchster Zentrifugationsintensität unverträglich ist, wenn eine Zentrifugation der genannten Probe mit einem Zentrifugationsprotokoll, das den genannten Zentrifugationsparameter höchster Zentrifugationsintensität aufweist, zu einer Minderung der Qualität der an der genannten Probe erzeugten Ergebnisse führen würde;
- Verhindern, dass Proben, die mit dem Zentrifugationsparameter höchster Zentrifugationsintensität unverträglich sind, zusammen mit den Proben, denen der Zentrifugationsparameter höchster Zentrifugationsintensität zugeordnet ist, in die Zentrifuge geladen werden.

10. Automatische Probenarbeitszelle, die Folgendes aufweist:
- eine Probeneingabestation zum Laden von Proben in die Probenarbeitszelle,
- ein Parameterzuordnungsmodul zum Zuordnen eines Zentrifugationsparameters zu jeder Probe;
- eine Steuereinheit zum Vergleichen der Zentrifugationsparameter der in die Zentrifuge geladenen oder zu ladenden Proben miteinander und zum Bestimmen des Zentrifugationsparameters höchster Zentrifugationsintensität infolge des Vergleichs;
- mindestens eine Zentrifuge, die zum Zentrifugieren der geladenen Proben in Übereinstimmung mit einem Zentrifugationsprotokoll gemäß dem Zentrifugationsparameter höchster Zentrifugationsintensität funktionell ist;
- einen Probenförderer zum Transportieren von Proben von der Probeneingabestation zu der wenigstens einen Zentrifuge und zum Laden von Proben in die wenigstens eine Zentrifuge,
wobei die automatische Probenarbeitszelle **dadurch gekennzeichnet ist, dass**:
die geladenen Proben Proben mit verschiedenen Zentrifugationsparametern aufweisen;
wobei die geladenen Proben mit dem Zentrifugationsprotokoll gemäß dem Zentrifugationsparameter höchster Zentrifugationsintensität zentrifugiert werden.

11. Automatische Probenarbeitszelle (100) nach Anspruch 10, die ferner Folgendes aufweist:
- einen ersten Zwischenspeicherbereich (318) zum Sammeln von Proben eines ersten Zentrifugationsparameters, wobei Proben des ersten Typs Proben sind, denen ein erster Zentrifugationsparameter höchster Zentrifugationsintensität zugeordnet ist, und
- einen zweiten Zwischenspeicherbereich (319) zum Sammeln von Proben, denen ein zweiter Zentrifugationsparameter zugeordnet ist;
wobei Proben (104, 105, 106) des ersten Zentrifugationsparameters vom Probenförderer (109) nach Erfüllung einer Beendigungsbedingung automatisch an die wenigstens eine Zentrifuge (108) übergeben werden und wobei unbelegte Zentrifugenbecher (304) mit Proben des zweiten Zentrifugationsparameters gefüllt werden.

12. Automatische Probenarbeitszelle (100) nach einem der Ansprüche 10 bis 11, die ferner wenigstens eine Analyseeinrichtung aufweist, wobei der Probenförderer (109) nach der Zentrifugation von Proben des ersten Probentyps und Proben anderer Typen in der wenigstens einen Zentrifuge gemäß einem Zentrifugationsprotokoll, das den Zentrifugationsparameter der höchsten Zentrifugationsintensität aufweist, zur automatischen Übergabe der Proben an die wenigstens eine Analyseeinrichtung funktionell ist.

## Revendications

1. Procédé mis en oeuvre par ordinateur pour faire fonctionner une cellule de travail d'échantillonnage automatisée (100), la cellule de travail comprenant un convoyeur d'échantillons (109) mettant en communication au moins une centrifugeuse (108) avec un poste d'entrée des échantillons (107), le procédé comprenant
- la réception (200) d'échantillons (104, 105, 106) par le poste d'entrée des échantillons (107) ;
- l'attribution (201) à chacun des échantillons d'un paramètre de centrifugation (101, 102, 103) ;
- le transport (202) de chacun des échantillons du poste d'entrée d'échantillons (107) vers l'au moins une centrifugeuse (108) ;
- la comparaison (203) des paramètres de centrifugation (101, 102, 103) des échantillons chargés ou devant être chargés dans la centrifugeuse et la détermination de la vitesse de centrifugation la plus élevée en tant que paramètre de centrifugation ;
le procédé étant **caractérisé par** :
- le chargement (204) des échantillons dans la centrifugeuse (108), les échantillons chargés comprenant des échantillons avec différents paramètres de centrifugation ;
- la centrifugation (205) des échantillons chargés selon un protocole de centrifugation comprenant la vitesse de centrifugation la plus élevée en tant que paramètre de centrifugation.

2. Procédé mis en oeuvre par ordinateur selon la revendication 1, dans lequel l'étape de chargement (204) des échantillons dans la centrifugeuse comprend les sous-étapes
- de collecte (400) des échantillons ayant un premier paramètre de centrifugation dans une première zone tampon ;
- de collecte (401) des échantillons ayant un second paramètre de centrifugation dans une seconde zone tampon ;
- de détermination (402) si une condition de l'arrêt de la collecte des échantillons dans les première et seconde zones tampons est remplie ;
- de chargement (403) des échantillons collectés dans la première zone tampon dans la centrifugeuse, si la condition de l'arrêt est remplie ;
- de remplissage (404) des godets inoccupés de la centrifugeuse avec les échantillons de la seconde zone tampon.

3. Procédé mis en oeuvre par ordinateur selon la revendication 2, dans lequel la condition de l'arrêt est choisie dans le groupe constitué par :
- la collecte d'un nombre prédéfini d'échantillons ayant le premier paramètre de centrifugation dans la première zone tampon,
- la survenance d'un moment particulier de la journée,
- l'écoulement d'un laps de temps prédéfini à partir du début de la collecte des échantillons, et
- la réception d'une commande pour l'exécution de la centrifugation avec les échantillons collectés jusqu'à présent.

4. Procédé mis en oeuvre par ordinateur selon l'une quelconque des revendications 2 ou 3, dans lequel les échantillons ayant le premier paramètre de centrifugation sont des échantillons apparaissant en quantité plus faible que les échantillons ayant le second paramètre de centrifugation.

5. Procédé mis en oeuvre par ordinateur selon l'une quelconque des revendications 2 ou 3, dans lequel les échantillons de la première zone tampon sont des échantillons ayant attribué une vitesse de centrifugation plus élevée en tant que paramètre de centrifugation que celle attribuée aux échantillons de la seconde zone tampon.

6. Procédé mis en oeuvre par ordinateur selon l'une quelconque des revendications 1 à 5, dans lequel la vitesse de centrifugation la plus élevée prise en tant que paramètre de centrifugation concerne les échantillons pour lesquels une demande d'analyse de la coagulation a été reçue par la cellule de travail d'échantillonnage automatisée.

7. Procédé mis en oeuvre par ordinateur selon l'une quelconque des revendications 1 à 6, dans lequel les échantillons auxquels la vitesse de centrifugation la plus élevée n'a pas été attribuée en tant que paramètre de centrifugation mais qui sont à centrifuger en même temps que les échantillons auxquels a été attribuée la vitesse de centrifugation la plus élevée en tant que paramètre de centrifugation sont choisis dans le groupe constitué par :
- des échantillons de sérum,
- des échantillons de plasma, et
- des échantillons d'urine.

8. Procédé mis en oeuvre par ordinateur selon l'une quelconque des revendications 1 à 7, dans lequel l'attribution d'un paramètre de centrifugation à chacun des échantillons est exécutée par un moteur de règles.

9. Procédé mis en oeuvre par ordinateur selon l'une quelconque des revendications 1 à 5, dans lequel l'étape de chargement des échantillons dans la centrifugeuse comprend les sous-étapes
- de détermination s'il existe des échantillons parmi les échantillons reçus qui sont incompatibles avec la vitesse de centrifugation la plus élevée prise en tant que paramètre de centrifugation, où un échantillon est incompatible avec la vitesse de centrifugation la plus élevée prise en tant que paramètre de centrifugation si la centrifugation dudit échantillon selon un protocole de centrifugation comprenant la vitesse de centrifugation la plus élevée prise en tant que ledit paramètre de centrifugation aurait pour résultat une réduction de la qualité des résultats générés concernant ledit échantillon ;
- de rejet des échantillons étant incompatibles avec la vitesse de centrifugation la plus élevée prise en tant que paramètre de centrifugation et destinés à être chargés dans la centrifugeuse en même temps que les échantillons auxquels a été attribuée la vitesse de centrifugation la plus élevée en tant que paramètre.

10. Cellule de travail d'échantillonnage automatisé comprenant :
- un poste d'entrée des échantillons pour le chargement des échantillons dans la cellule de travail d'échantillonnage,
- un module d'attribution de paramètre pour attribuer un paramètre de centrifugation à chacun des échantillons ;
- un système de contrôle pour comparer l'un à l'autre les paramètres de centrifugation des échantillons chargés ou devant être chargés dans la centrifugeuse et pour la détermination, du fait de la comparaison, de la vitesse de centrifugation la plus élevée en tant que paramètre de centrifugation ;
- le fonctionnement d'au moins une centrifugeuse pour centrifuger les échantillons chargés conformément avec un protocole de centrifugation avec la vitesse de centrifugation la plus élevée prise en tant que paramètre de centrifugation ;
- un convoyeur d'échantillons pour le transport des échantillons du poste d'entrée des échantillons vers l'au moins une centrifugeuse et pour le chargement des échantillons dans l'au moins une centrifugeuse,
la cellule de travail d'échantillonnage automatisée étant **caractérisée par le fait que** :
les échantillons chargés comprennent des échantillons avec différents paramètres de centrifugation,
où les échantillons chargés sont centrifugés selon le protocole de centrifugation avec la vitesse de centrifugation la plus élevée prise en tant que paramètre de centrifugation.

11. Cellule de travail d'échantillonnage automatisé (100) selon la revendication 10, comprenant en outre
- une première zone tampon (318) pour la collecte des échantillons avec un premier paramètre de centrifugation, dans lequel les échantillons du premier type sont des échantillons auxquels a été attribuée la vitesse de centrifugation la plus élevée en tant que premier paramètre de centrifugation, et
- une seconde zone tampon (319) pour la collecte des échantillons auxquels a été attribué un second paramètre de centrifugation,
où les échantillons (104, 105, 106) avec le premier paramètre de centrifugation sont automatiquement transférés par le convoyeur d'échantillons (109) vers l'au moins une centrifugeuse (108) après qu'une condition d'arrêt ait été remplie, et où les godets (304) inoccupés de la centrifugeuse sont remplis avec des échantillons du second paramètre de centrifugation.

12. Cellule de travail d'échantillonnage automatisé (100) selon l'une quelconque des revendications 10 à 11, comprenant en outre au moins un analyseur, où le convoyeur d'échantillons (109), après la centrifugation des échantillons du premier type d'échantillons et des échantillons des autres types dans l'au moins une centrifugeuse selon le protocole de centrifugation comprenant la vitesse de centrifugation la plus élevée en tant que paramètre de centrifugation, peut être utilisé pour transférer automatiquement les échantillons vers l'au moins un analyseur.
